# FASCICULE DE BREVET EUROPEEN

(11) **EP 0 843 452 B1**
(45) Date de publication et mention de la délivrance du brevet: **16.03.2005**
(21) Numéro de dépôt: 97402657.7
(22) Date de dépôt: 06.11.1997
(51) Int. Cl.: H04M 1/03

(54) **Combiné téléphonique avec épaisseur réduite de la partie écouteur**
Telefonhörer mit verringerter Dicke der Hörmuschel
Telephone handset with reduced thickness of the receiver

(30) Priorité: 14.11.1996 FR 9613870
(43) Date de publication de la demande: 20.05.1998
(73) Titulaire: ALCATEL, 75008 Paris (FR)
(72) Inventeur: Abraham, Denis, 95240 Vanves (FR); Dufosse, Stéphane, 95240 Cormeilles en Parisis (FR)
(74) Mandataire: Feray, Valérie

(56) Documents cités:
- EP-A- 0 595 514
- FR-A- 2 665 045
- US-A- 5 201 069
- PATENT ABSTRACTS OF JAPAN vol. 010, no. 069 (E-389), 18 mars 1986 & JP 60 218998 A (MATSUSHITA DENKI SANGYO KK), 1 novembre 1985,

## Description

La présente invention se rapporte à un combiné téléphonique et concerne la partie écouteur d'un tel combiné. L'invention a pour but de réduire l'épaisseur d'un tel combiné au niveau de la partie écouteur.

L'invention s'applique, en particulier, aux combinés téléphoniques mobiles. Il est en effet particulièrement nécessaire de réduire le volume et plus spécialement l'épaisseur de tels appareils puisqu'ils sont destinés à être portés dans une poche de leur utilisateur.

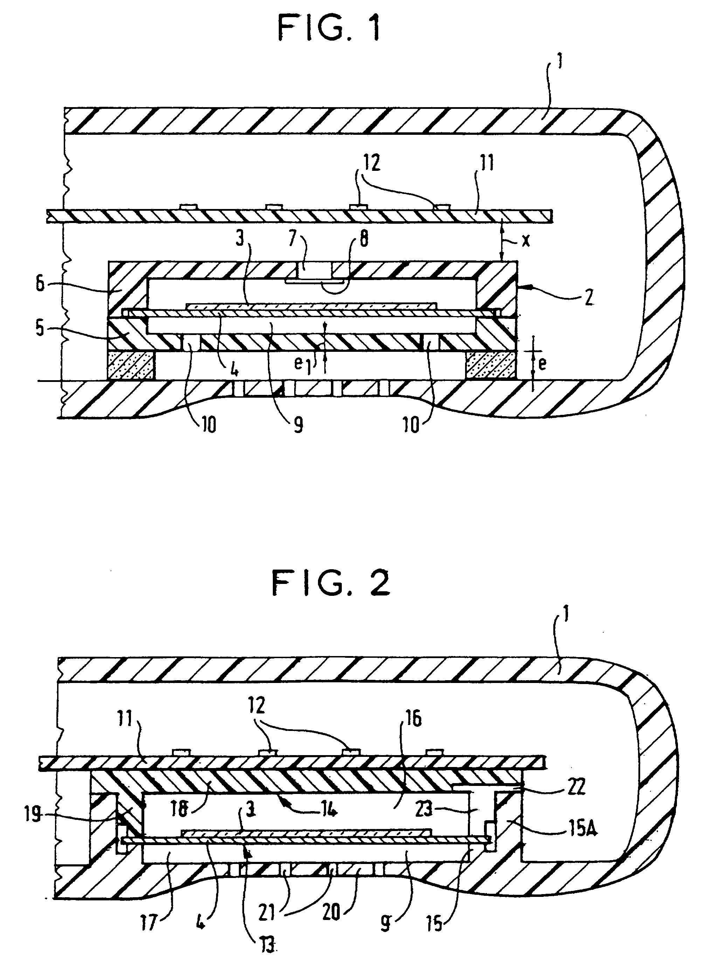

Un combiné téléphonique connu, dans sa partie écouteur est représenté figure 1. Il comprend un boîtier 1 dans lequel est montée une capsule écouteur 2.

Cette capsule écouteur est essentiellement constituée d'un disque piézo-électrique 3 (céramique) collé sur un disque métallique 4.

Les variations de tension électrique alternative appliquée aux bornes de cet ensemble engendrent une vibration alternative de l'ensemble à la même fréquence que les variations de tension et produit ainsi des ondes de pression sonores. Cependant, la courbe de réponse du système, représentant l'amplitude des vibrations sonores en fonction de la fréquence d'excitation présente un pic correspondant à sa fréquence propre (aux environs de 1000 Hz) et un affaiblissement important au-delà de cette fréquence.

Pour obtenir une courbe de réponse acceptable dans la gamme des fréquences vocales, il faut, d'une part, amortir l'amplitude de la fréquence propre et, d'autre part, amplifier la gamme des aigus.

Ainsi, on place derrière l'ensemble vibrant 3, 4 une résistance acoustique pour amortir le pic et un résonateur de Helmoltz devant cet ensemble pour amplifier les aigus.

Pour ce faire, le disque 3 est serré entre deux parties 5 et 6 formant une capsule 2 et la paroi arrière 6 est percée d'un trou 7 obturé par un tissu 8 dont le rôle est de constituer des micro-trous créant une résistance acoustique.

Le résonateur de Helmoltz pour l'amplification des aigus est constitué du volume 9 entre le disque 4 et la partie 5 et de quelques trous 10 d'un diamètre de l'ordre de 1 mm dans la paroi avant de la partie 5.

Pour ne pas perturber le fonctionnement de la résistance acoustique, il est nécessaire de laisser un espace libre x de 1 à 2 mm derrière la paroi arrière de la partie 6 de la capsule 2.

La platine 11 de circuit imprimé supportant les différents composants électroniques 12 du combiné ne peut donc pas être placée à une distance inférieure à cette valeur x de la paroi arrière de la capsule 2.

Entre la capsule écouteur 2 et la paroi 1 du boîtier est disposé un joint circulaire d'une épaisseur e d'environ 1 mm.

La présente invention a pour but de proposer un combiné téléphonique dans lequel la partie écouteur est moins épaisse. Il s'agit donc d'une disposition structurelle permettant de diminuer cette épaisseur.

Un combiné téléphonique comprenant les caractéristiques du préambule de la revendication 1 est connu du document FR-A-2665045.

L'invention a ainsi pour objet un combiné téléphonique comportant au moins une partie écouteur et comprenant un boîtier, ledit boîtier contenant au moins un disque piezo-électrique lié à un disque support électriquement conducteur, ledit disque support étant maintenu serré sur sa périphérie entre deux pièces de maintien et séparant un premier volume, appelé volume arrière , délimité d'une part par l'ensemble formé du disque piezo-électrique et son disque support et d'autre part par une paroi arrière en vis-à-vis dudit ensemble et une paroi latérale circulaire , la paroi arrière et la paroi latérale constituant une pièce arrière, ladite pièce arrière étant aménagée de façon à permettre le passage de micro-fuites pour constituer avec le volume arrière un dispositif amortisseur acoustique, et un second volume, appelé volume avant, situé de l'autre côté dudit ensemble et constituant, avec des trous percés dans une paroi dudit volume avant faisant face audit ensemble, un résonateur de Helmoltz, caractérisé en ce que ledit boîtier contient en outre une platine support de composants électroniques directement appliquée contre ladite paroi arrière dudit volume arrière.

Selon une autre caractéristique, ladite paroi dudit volume avant faisant face audit ensemble appartient audit boîtier lui-même et constitue la partie de la paroi du boîtier destinée à être appliquée contre l'oreille de l'utilisateur, ledit volume avant comportant également une paroi latérale circulaire de délimitation dudit volume, ladite paroi latérale appartenant audit boîtier.

Selon une réalisation particulière, lesdites micro-fuites sont aménagées dans ladite pièce arrière de façon à s'évacuer par des fentes latérales.

On va maintenant donner la description d'un exemple de mise en oeuvre de l'invention en se reportant au dessin annexé dans lequel :

La figure 1 représente schématiquement une vue partielle, en coupe, de la partie écouteur d'un combiné téléphonique de l'art antérieur décrit ci-dessus.

La figure 2 est l'équivalent de la figure 1 mais d'un combiné téléphonique selon l'invention. Sur cette figure, la pièce référencée 14, représentée isolément figure 3, est vue en coupe selon A-A de la figure 3.

La figure 3 montre isolément en vue de dessous la pièce appelée pièce arrière de la figure 2 et référencée 14.

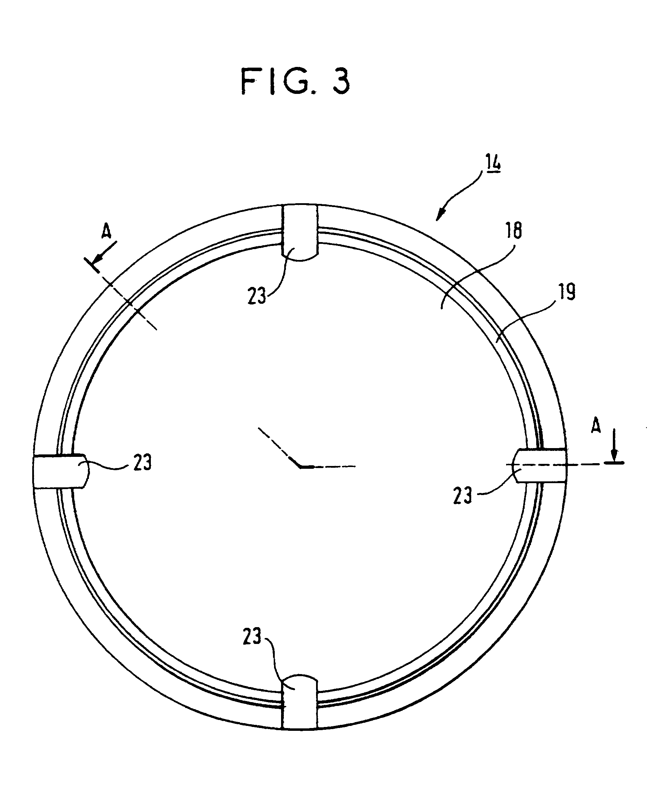

En se reportant aux figure 2 et 3, on voit donc une partie d'un combiné téléphonique, plus particulièrement la partie écouteur. Comme sur la figure 1, ce combiné comprend un boîtier extérieur 1 contenant tous les organes du combiné et en particulier la partie écouteur dont la source sonore transformant les signaux électriques en organe vibrant produisant des ondes de pressions sonores est constituée d'un disque piezo-électrique 3 en céramique collé, au moyen d'une colle électriquement conductrice, à un disque support 4 électriquement conducteur. La tension électrique alternative représentative du son à reproduire est appliqué entre ces deux organes par des fils, non représentés, soudés à ces organes.

Le boîtier contient aussi, entre autres, une platine 11 support de différents composants électroniques 12 nécessaires au fonctionnement du combiné.

Dans l'art antérieur représenté figure 1, l'élément vibrant émetteur de son, constitué par l'ensemble formé du disque piézo-électrique 3 et son disque support 4 est enfermé dans une capsule 2 disposée dans le boîtier 1.

Dans l'invention, cet ensemble disque piézo-électrique 3 avec son disque support 4 est placé dans une capsule intégrée au boîtier 1.

L'ensemble 3-4, appelé ensemble vibrant et référencé 13, est en effet maintenu en place dans le boîtier 1 par la périphérie du disque support 4 serré entre deux pièces de maintien dont l'une 14 est appelée pièce arrière et dont l'autre fait partie du boîtier 1 et est constituée par une paroi latérale circulaire 15.

L'ensemble vibrant 13 sépare un premier volume 16, appelé volume arrière, d'un second volume 17, appelé volume avant. Le premier volume 16 est délimité d'une part par l'ensemble vibrant 13 et d'autre part par ladite pièce arrière 14 comprenant une paroi arrière 18 en vis-à-vis de l'ensemble 13 et une paroi latérale circulaire 19.

Le volume avant 17 est délimité par ce même ensemble vibrant 13, une paroi 20 faisant face audit ensemble et appartenant au boîtier 1 et ladite paroi latérale circulaire 15. Ce volume avant 17, constitue, avec des trous 21 percés dans la paroi 20 un résonateur de Helmoltz pour l'amplification des fréquences aiguës. Les trous 21 ont, par exemple, un diamètre de l'ordre du millimètre.

Afin d'atténuer le pic de résonance aux environs de 1000 Hz, on crée un amortisseur acoustique en réalisant des micro-fuites dans une paroi du volume arrière 16.

Dans la réalisation préférée de l'invention représentée figure 2 et 3, ces micro-fuites sont effectuées par des fentes latérales 22. Comme on le voit sur ces figures 2 et 3, ces fentes 22 résultent d'une part, d'encoches 23 effectuées dans la paroi latérale 19 de la pièce arrière 14, encoches qui mordent un peu dans l'épaisseur de la paroi 18 de cette pièce arrière 14, et d'autre part de l'interruption de l'appui au niveau de ces encoches, de la pièce arrière 14, contre une paroi latérale 15 A appartenant au boîtier 1. Ces fentes 22 sont par exemple au nombre de 4 et ont une épaisseur très faible par exemple de 0,08 mm. Les micro-fuites à travers ces fentes latérales 22 s'échappent latéralement et l'on peut ainsi appliquer directement la platine support 11 contre la paroi 18 de la pièce arrière 14. On économise ainsi l'espace x de la figure 1, ce qui permet de diminuer d'autant l'épaisseur du boîtier 1. L'espace x était de 1 à 2 mm.

Par ailleurs, le fait que la « capsule » soit intégrée au boîtier permet également d'économiser, d'une part le joint e de la figure 1, de 1 mm, et d'autre part l'épaisseur e₁ de la paroi inférieure, d'environ 0,5 mm, de la capsule 2 de ce même art antérieur (figure 1). On peut donc encore diminuer l'épaisseur du boîtier 1 de 1,5 mm. Avec la disposition précédente des fentes latérales la réduction d'épaisseur due à la disposition précédente des fentes latérales 22 permettant d'appliquer les platines 11 contre la paroi 18, on obtient donc une réduction totale d'épaisseur comprise entre 2,5 mm et 3,5 mm, ce qui est très appréciable pour un objet portatif.

On peut également bénéficier de l'économie d'épaisseur x dû à l'appui direct de la platine 11 contre la paroi 18 en continuant à permettre l'évacuation des micro-fuites par la paroi arrière 18 comme sur la figure 1 de l'art antérieur au moyen d'un trou 7 et d'un tissu 8 (pour faire des micro-trous) mais à condition d'effectuer également un trou exactement en face du trou 7, dans la platine support 11.

Cette disposition qui fait également partie de l'invention est cependant moins intéressante car elle suppose une platine support 11 aménagée spécialement.

## Revendications

1. Combiné téléphonique comportant au moins une partie écouteur et comprenant un boîtier (1), ledit boîtier contenant au moins un disque piezo-électrique (3) lié à un disque support (4) électriquement conducteur, ledit disque support étant maintenu serré sur sa périphérie entre deux pièces de maintien (14,15) et séparant un premier volume, appelé volume arrière (16), délimité d'une part par l'ensemble formé du disque piezo-électrique (3) et son disque support (4) et d'autre part par une paroi arrière en vis-à-vis dudit ensemble (3, 4) et une paroi latérale circulaire (19), la paroi arrière et la paroi latérale constituant une pièce arrière (14), ladite pièce arrière (14) étant aménagée de façon à permettre le passage de micro-fuites pour constituer avec le volume arrière (16) un dispositif amortisseur acoustique, et un second volume, appelé volume avant (17), situé de l'autre côté dudit ensemble et constituant, avec des trous (21) percés dans une paroi (20) dudit volume avant faisant face audit ensemble (3-4), un résonateur de Helmoltz, **caractérisé en ce que** ledit boîtier contient en outre une platine support (11) de composants électroniques (12) directement appliquée contre ladite paroi arrière (18) dudit volume arrière (16).

2. Combiné téléphonique selon la revendication 1, **caractérisé en ce que** ladite paroi (20) dudit volume avant (17) faisant face audit ensemble (3-4) appartient audit boîtier (1) lui-même et constitue la partie de la paroi du boîtier destinée à être appliquée contre l'oreille de l'utilisateur, ledit volume avant (17) comportant également une paroi latérale circulaire (15) de délimitation dudit volume avant, ladite paroi latérale (15) appartenant audit boîtier.

3. Combiné téléphonique selon l'une des revendications 1 ou 2, **caractérisé en ce que** lesdites micro-fuites sont aménagées dans ladite pièce arrière (14) de façon à s'évacuer par des fentes latérales (22).

4. Combiné téléphonique selon l'une des revendications 1 ou 2, **caractérisé en ce que** lesdites micro-fuites sont aménagées au travers de ladite paroi arrière (18) de ladite pièce arrière (14) et de ladite platine support (11).

## Patentansprüche

1. Telefonhörer, der mindestens einen Hörmuschelteil umfasst und ein Gehäuse (1) aufweist, wobei das besagte Gehäuse mindestens eine Piezokristallplatte (3) enthält, die mit einer elektrisch leitenden Trägerscheibe (4) verbunden ist, wobei die besagte Trägerscheibe an ihrem Rand zwischen zwei Halteteilen (14, 15) eingeklemmt gehalten wird und dabei einen ersten Raum abteilt, hinterer Raum (16) genannt, der einerseits von der Konstruktion abgegrenzt wird, die von der Piezokristallplatte (3) und ihrer Trägerscheibe (4) und andererseits von einer Rückwand gegenüber der besagten Konstruktion (3, 4) und einer kreisförmigen Seitenwand (19) gebildet wird, wobei die Rückwand und die Seitenwand ein Hinterteil (14) bilden, wobei das besagte Hinterteil (14) so ausgestaltet ist, dass Mikrodurchlässe eingearbeitet werden können, um mit dem hinteren Raum (16) eine Vorrichtung zur akustischen Dämpfung zu bilden, und einen zweiten Raum, vorderer Raum (17) genannt, der sich auf der anderen Seite der besagten Konstruktion befindet und mit seinen Löchern (21), die in die Wand (20) des besagten vorderen Raums eingearbeitet sind, die der besagten Konstruktion (3-4) gegenüberliegt, einen Helmholtz-Resonator bildet, **dadurch gekennzeichnet, dass** das besagte Gehäuse außerdem eine Trägerplatine (11) mit elektronischen Bauteilen (12) enthält, die direkt an der Rückwand (18) des besagten hinteren Raums (16) anliegt.

2. Telefonhörer nach Anspruch 1, **dadurch gekennzeichnet, dass** die besagte Wand (20) des besagten vorderen Raums (17), die der besagten Konstruktion (3-4) gegenüberliegt, zu besagtem Gehäuse (1) selbst gehört und den Teil der Wand des Gehäuses darstellt, der dazu bestimmt ist, gegen das Ohr des Nutzers gedrückt zu werden, wobei der besagte vordere Raum (17) ebenfalls eine kreisförmige Seitenwand (15) umfasst, die den besagten vorderen Raum abgrenzt, wobei die besagte Seitenwand (15) zum besagten Gehäuse gehört.

3. Telefonhörer nach Anspruch 1 oder 2, **dadurch gekennzeichnet, dass** die besagten Mikrodurchlässe in das besagte Hinterteil (14) so eingearbeitet sind, dass sie durch Seitenschlitze (22) verlaufen.

4. Telefonhörer nach Anspruch 1 oder 2, **dadurch gekennzeichnet, dass** die besagten Mikrodurchlässe durch die besagte Rückwand (18) des besagten Hinterteils (14) und die besagte Trägerplatine (11) eingearbeitet sind.

## Claims

1. A telephone handset including at least one receiver portion and comprising a casing (1), said casing containing at least one piezoelectric disk (3) connected to an electrically conducting support disk (4), said support disk being held tightly on its periphery between two supporting parts (14, 15) and separating a first space called the rear space (16), delimited by the assembly formed with the piezoelectric disk (3) and its support disk (4) on the one hand, and on the other hand by a rear wall facing said assembly (3, 4) and a circular side wall (19), the rear wall and the side wall forming a rear part (14), said rear part (14) being arranged so as to allow the passing of microleaks, in order to form with the rear space (16) an acoustic damping device, and the second space called the front space (17), located on the other side of said assembly and forming, with holes (21) pierced in a wall (20) of said front space facing said assembly (3-4), a Helmholtz resonator, **characterized in that** said casing further contains a plate (11) supporting electronic components (12), directly applied against said rear wall (18) of said rear space (16).

2. The telephone handset according to claim 1, **characterized in that** said wall (20) of said front space (17) facing said assembly (3-4) belongs to said casing (1) itself and forms the portion of the wall of the casing intended to be applied against the ear of the user, said front space (17) also including a circular side wall (15) for delimiting said front volume, said side wall (15) belonging to said casing.

3. The telephone handset according to any of claims 1 or 2, **characterized in that** said microleaks are laid out in said rear part (14) in order to be cleared through side slots (22).

4. The telephone handset according to any of claims 1 or 2, **characterized in that** said microleaks are laid out through said rear wall (18) of said rear part (14) and said support plate (11).
